# EUROPÄISCHE PATENTSCHRIFT

(11) **EP 3 652 092 B1**
(45) Veröffentlichungstag und Bekanntmachung des Hinweises auf die Patenterteilung: **18.12.2024**
(21) Anmeldenummer: 18731424.0
(22) Anmeldetag: 13.06.2018
(51) Int. Cl.: B65G 47/08

(54) **VERFAHREN UND VORRICHTUNG ZUR HANDHABUNG VON STÜCKGÜTERN, ARTIKELN UND/ODER GEBINDEN**
METHOD AND DEVICE FOR HANDLING PIECE GOODS, ARTICLES AND/OR PACKS
PROCÉDÉ ET DISPOSITIF DE MANIPULATION DE MARCHANDISES DE DÉTAIL, D'ARTICLES ET/OU D'EMBALLAGES

(30) Priorität: 14.07.2017 DE 102017212157
(43) Veröffentlichungstag der Anmeldung: 20.05.2020
(73) Patentinhaber: Krones Aktiengesellschaft, 93073 Neutraubling (DE)
(72) Erfinder: KIRZINGER, Johannes, 93073 Neutraubling (DE); MEHDI, Arsalan, 93073 Neutraubling (DE); EHBERGER, Marco, 93073 Neutraubling (DE); WESTERMEIER, Christian, 93073 Neutraubling (DE); BEER, Erhard, 93073 Neutraubling (DE); SCHWALB, Felix, 93073 Neutraubling (DE); GRIMM, Sebastian, 93073 Neutraubling (DE); KOLLMUSS, Manuel, 93073 Neutraubling (DE); ASTNER, Michael, 93073 Neutraubling (DE)
(74) Vertreter: Benninger, Johannes
(86) Internationale Anmeldenummer: PCT/EP2018/065586
(87) Internationale Veröffentlichungsnummer: WO 2019/011560

(56) Entgegenhaltungen:
- EP-A2- 2 174 895
- WO-A1-2017/220215
- DE-A1- 102011 080 812
- DE-A1- 102014 017 968
- DE-A1- 102014 223 319
- US-B1- 6 290 448

## Beschreibung

Die vorliegende Erfindung betrifft ein Verfahren und eine Vorrichtung zur Handhabung von Stückgütern, Artikeln und/oder Gebinden gemäß den Merkmalen der unabhängigen Ansprüche 1 bzw. 9.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Ein Verfahren nach dem Oberbegriff des Anspruchs 1 ist zum Beispiel aus der DE 10 2011 080 812 A1 oder der WO 2017/220215 A1, welche Stand der Technik nach Artikel 54(3) EPÜ ist, bekannt.

Die Offenlegungsschrift EP 2 174 895 A2 offenbart eine Vorrichtung und ein Verfahren zum ökonomischen Formen von Gebindelagen und Mitwirkung eines Greifers. Dieser ist derart gestaltet, dass mit diesem mindestens ein Gebinde positioniert und/oder gedreht werden kann und dass auf dem positionierten und/oder gedrehten Gebinde mindestens ein weiteres Gebinde in gleicher Orientierung abgesetzt werden kann.

Die Aufgabe der Erfindung besteht darin, ein Verfahren und eine Vorrichtung zur Handhabung und/oder Gruppierung von Stückgütern, Artikeln und/oder Gebinden bereitzustellen, die einen erhöhten Durchsatz gegenüber bekannten Verfahren und Vorrichtungen zur Lagenbildung aufweisen und dabei insbesondere prozesssicher und fehlerfrei arbeiten.

Diese Aufgabe wird mit den Gegenständen der unabhängigen Ansprüche, d.h. durch ein Verfahren und eine Vorrichtung zur Handhabung und/oder Gruppierung von Stückgütern, Artikeln und/oder Gebinden erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung betrifft ein Verfahren und eine Vorrichtung zur Handhabung und/oder Gruppierung von Stückgütern, Artikeln und/oder Gebinden bei und/oder im Zusammenhang mit deren Gruppierung und/oder deren Lagenbildung, insbesondere zum Zwecke der Ausbildung von aus jeweils mehreren Stückgütern, Artikeln und/oder Gebinden bestehenden palettierfähigen Lagen. Dabei sind grundsätzlich auch Handhabungs- und Manipulationsabfolgen möglich, die mit einem sog. Dreh- und Verteilsystem durchführbar sind oder durchgeführt werden. Das im folgenden Zusammenhang beschriebene Verfahren soll sich somit auch auf solche Dreh- und Verteilsysteme beziehen.

Nachfolgend wird generell von Stückgütern gesprochen. Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die Vorrichtung umfasst mindestens eine Transporteinrichtung zur ein- oder mehrreihige Förderung der Stückgüter, Artikel und/oder Gebinde in einer Transportrichtung. Die in einer Reihe ohne Abstände oder mit minimalen Abständen bewegten und/oder zu einem - insbesondere Manipulationsbereich oder Erfassungsbereich oder Bewegungsraum genannten - Bereich beförderten, mindestens zwei unmittelbar aufeinanderfolgenden Stückgüter werden vorzugsweise als geschlossene Formation transportiert. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Als abweichende Option, die sich gleichwohl auf einige Ausführungsvarianten des erfindungsgemäßen Verfahrens zum Umgang mit in mindestens einer Reihe hintereinander bewegten Stückgütern und/oder der erfindungsgemäßen Vorrichtung zum Umgang mit in mindestens einer Reihe hintereinander bewegten Stückgütern oder auch auf mehrere Ausführungsvarianten dieses Verfahrens bzw. dieser Vorrichtung beziehen kann, können die in definierten Reihen ohne jeweilige Abstände oder mit minimalen jeweiligen Abständen voneinander bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden. Mit dem Begriff der getakteten Formation und/oder des getakteten Zulaufs ist eine weitgehend regelmäßige Aufeinanderfolge von definierten Reihen von Stückgütern gemeint, die in den definierten Reihen hintereinander transportiert werden, wobei jedoch zwischen aufeinander folgenden Reihen die definierten Lücken auftreten können, was den Begriff der Taktung des Zulaufs bzw. der Taktung der Formationen meint. Die geschlossenen und/oder lückenlosen Reihen im Sinne der vorliegenden Erfindung können jeweils eine endliche Länge haben und eine begrenzte Zahl von Stückgütern umfassen, wonach eine Lücke und einer solchen Lücke ggf. eine weitere solche Reihe mit jeweils lückenlos aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die geschlossenen Reihen einer solchermaßen getakteten Formation können grundsätzlich jeweils eine beliebige Anzahl von Stückgütern umfassen.

Über die mindestens eine Transporteinrichtung werden die Stückgüter ein- oder mehrreihig in jeweils geschlossener und/oder lückenloser Formation oder in Formation mit jeweils zwischen den Stückgütern bestehenden Lücken zu einem Gruppiermodul mit wenigstens einer Horizontalfördereinrichtung sowie mindestens einem Manipulator für die Stückgüter transportiert. Der Manipulator erfasst mindestens eines der in seinen Erfassungsbereich einlaufenden Stückgüter oder auch Gruppen von zwei oder mehr Stückgütern und bringt diese durch Drehen und/oder Verschieben und/oder Heben in eine definierte Lagenanordnung. Dabei entsteht eine sogenannte vorbereitete palettierfähige Lage, bei der noch Lücken zwischen einzelnen Stückgütern vorhanden sein können, die vor dem eigentlichen Palettierschritt noch entfernt werden müssen.

Aus den in geschlossener Formation einlaufenden Stückgütern wird durch den Manipulator des Gruppiermoduls wenigstens ein transportiertes Stückgut nacheinander erfasst und durch Drehen und/oder Verschieben und/oder Heben in eine definierte Lagenanordnung gebracht. Insbesondere wird durch den Manipulator des Gruppiermoduls wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Auch aus den geschlossenen Reihen einer getakteten, lückenbehafteten Formationen wird durch den Manipulator des Gruppiermoduls jeweils wenigstens ein transportiertes Stückgut klemmend und/oder kraftschlüssig und/oder formschlüssig erfasst, von der lückenbehafteten Reihe der getakteten Formation räumlich abgetrennt und in eine definierte relative Zielposition und/oder Zielausrichtung bzw. Lagenanordnung gegenüber nachfolgenden Stückgütern der Formation gebracht werden, wobei meist ein zuvorderst befindliches Stückgut der jeweiligen Reihe mittels des Manipulators erfasst und von der Reihe abgegriffen wird.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Die Stückgüter werden innerhalb des Gruppiermoduls auf der Horizontalfördereinrichtung mit einer Fördergeschwindigkeit der Horizontalfördereinrichtung transportiert, einzelne Stückgüter oder Gruppen von Stückgütern werden durch den Manipulator erfasst und gegriffen und auf der Horizontalfördereinrichtung verschoben, versetzt, positioniert und/oder neu ausgerichtet. Wahlweise können die Stückgüter hierbei gegenüber einer Fördergeschwindigkeit der Horizontalfördereinrichtung verzögert oder beschleunigt und ggf. gedreht und/oder schräg zu einer Förderrichtung der Horizontalfördereinrichtung versetzt werden. Die Fördergeschwindigkeit der Horizontalfördereinrichtung entspricht in der Regel der Zuführgeschwindigkeit, mit der die Stückgüter über die Transporteinrichtung in das Gruppiermodul einlaufen.

Hierbei ist vorgesehen, dass wenigstens einer der in zeitlicher Folge nacheinander zur Bildung einer definierten Lagenanordnung innerhalb des Gruppiermoduls durchgeführten Handhabungsschritte des Erfassens, Drehens, Verschiebens und/oder Hebens wenigstens eines Stückgutes das Anheben und Überheben des jeweiligen mindestens einen durch den Manipulator erfassten Stückgutes über mindestens ein weiteres im Erfassungsbereich des Manipulators befindliches Stückgut beinhaltet. Dabei - wird ein bereits durch den Manipulator in eine Zielposition und /oder Zielanordnung verbrachtes Stückgut überhoben, insbesondere ein Stückgut, das zuvor bereits vom Manipulator erfasst und verschoben, gedreht und/oder angehoben und dabei zur Lagenbildung neu positioniert wurde und/oder sich in Transportrichtung nicht fluchtend zu einer dem Gruppiermodul vorgeordneten Transporteinrichtung bewegt, von der es an eine Horizontalfördereinrichtung des Gruppiermoduls übergeben wurde.

Das bereits positionierte Stückgut, das Überhoben wird, kann sich dabei in Transportrichtung in Flucht vor der Reihe der nachlaufenden Stückgüter befinden, von denen der Manipulator mindestens ein Stückgut abgreift. Alternativ kann das bereits positionierte Stückgut auch seitlich versetzt zu der Reihe der nachlaufenden Stückgüter angeordnet sein, d.h. sich in Transportrichtung nicht fluchtend zu einer dem Gruppiermodul vorgeordneten Transporteinrichtung bewegen, von der es an eine Horizontalfördereinrichtung des Gruppiermoduls übergeben wurde. Zudem kann das bereits positionierte Stückgut eine andere Zielanordnung als die über die mindestens eine Transporteinrichtung nachlaufenden Stückgüter aufweisen, wenn es im Zuge der Positionierung durch den Manipulator beispielsweise um 90° oder um 270° verdreht worden ist. Das durch den Manipulator mindestens eine erfasste Stückgut kann beispielsweise derart über das bereits positionierte Stückgut gehoben werden, dass es sich in Transportrichtung vor oder seitlich versetzt zu dem bereits positionierten Stückgut befindet. Dabei kann das mindestens eine erfasste Stückgut gegebenenfalls durch den Manipulator gegenüber der anfänglichen Ausrichtung innerhalb der einlaufenden Reihe verdreht werden.

Anschließend werden die in die Lagenanordnung gebrachten Stückgüter zu dem Gruppiermodul nachgeordneten weiteren Handhabungs-, Stapel- und/oder Palettiermodulen weiterbefördert, beispielsweise zu mindestens einer Vorgruppierung, in der gegebenenfalls zwischen den gemäß einem vorgegebenen Lagenschema innerhalb des Gruppiermoduls angeordneten Stückgütern vorhandene Lücken durch Zusammenschieben der innerhalb des Gruppiermoduls vorbereiteten Lage entfernt werden, bevor diese sogenannte komprimierte oder geschlossene Lage nachfolgend beispielsweise auf eine Palette überführt wird.

Gemäß einer bevorzugten Ausführungsform wird das mindestens eine vom Manipulator erfasste Stückgut während seiner Positionierung durch den Manipulator mit einer Bewegungskomponente quer zur Transportrichtung bewegt und dabei in eine Höhe gehoben, die eine Kollision mit dem überhobenen mindestens einen Stückgut vermeidet. Insbesondere wird das Stückgut dabei mit mindestens einer vertikal nach oben gerichteten Bewegungskomponente beaufschlagt und in eine Höhe überhalb der Förderfläche der Horizontalfördereinrichtung angehoben, die größer ist als die Höhe des zu überhebenden mindestens einen Stückgutes.

Bei einer anderen Ausführungsform ist vorgesehen, dass die im Erfassungsbereich befindlichen Stückgüter hinsichtlich ihrer Positionen und/oder auf das Vorhandensein von Lücken zwischen aufeinanderfolgend transportierten Stückgütern sensorisch erfasst werden. Mindestens ein geeigneter Sensor ermittelt hierbei, ob sich zwischen aufeinanderfolgenden Stückgütern im Erfassungsbereich des Manipulators Lücken befinden. Dabei können sowohl bereits positionierte als auch nachlaufende, noch nicht manipulierte Stückgüter innerhalb des Erfassungsbereichs erfasst und entsprechend bewertet werden. Wird eine ausreichend große Lücke zwischen aufeinanderfolgenden Stückgütern im Erfassungsbereich ermittelt, kann vorgesehen sein, dass der Manipulator entsprechend angesteuert wird, um mindestens ein weiteres Stückgut in die Lücke einzufügen. Hierbei kann - sofern ausreichend Platz vorhanden ist - das einzufügende Stückgut beispielsweise in die Lücke eingeschoben werden. Häufiger jedoch wird der Platz um die Lücke herum hierfür nicht ausreichen, so dass es notwendig sein kann, das Stückgut unter Überheben weiterer Stückgüter in die Lücke von oben her einzufügen, insbesondere hineinzusenken.

Dies ist insbesondere vorteilhaft, wenn beispielsweise bei der Lagenbildung innerhalb des Gruppiermoduls eine ungewünschte Lücke zwischen den Stückgütern der Lagenanordnung aufgrund mindestens eines fehlenden Stückgutes ausgebildet wird. Gemäß einer Ausführungsform erfasst ein Bilderkennungssensor die erstellte Lagenanordnung und übermittelt die erfassten Daten an eine Steuereinheit, die das erfasste Lagenbild mit dem gewünschten Lagenbild abgleicht. Ermittelt die Steuereinheit eine Abweichung zwischen dem erfassten Lagenbild und dem gewünschten Lagenbild, dann berechnet die Steuereinheit die Anzahl und Position der fehlenden Stückgüter sowie einen korrigierenden Arbeits- oder Bewegungsablauf für den Manipulator. Anschließend steuert die Steuereinheit den Manipulator derart an, dass dieser eine entsprechende Anzahl an Stückgütern von einer Reihe nachlaufender Stückgüter abgreift und in eine erkannte und/oder berechnete Fehlerposition der fehlerhaften Lagenanordnung einsetzt. Dabei ist es in der Regel notwendig, das mindestens eine für die Korrektur des fehlerhaften Lagenbildes notwendige vom Manipulator erfasste Stückgut über zumindest einen Teil der bereits innerhalb der Lagenanordnung korrekt positionierten Stückgüter hinweg zu heben und von oben her in die Fehlerposition einzusetzen, um Kollisionen mit den korrekt positionierten Stückgütern zu vermeiden. Das hier beschriebene Verfahren und die Vorrichtung können somit auch vorteilhaft genutzt werden, um Bewegungsabläufe des Manipulators bei der Herstellung und insbesondere bei der Korrektur der Lagenanordnungen anzusteuern.

Im Zuge des Anhebens und Überhebens des jeweiligen mindestens einen Stückgutes über mindestens ein weiteres im Erfassungsbereich Stückgut kann vorgesehen sein, dass gleichzeitig eine zumindest kurzzeitige Verzögerung der Zuführgeschwindigkeit der mindestens einen Transporteinrichtung und/oder eine zumindest kurzzeitige Verzögerung der Fördergeschwindigkeit der Horizontalfördereinrichtung erfolgt, so dass der Nachschub an über die mindestens eine Transporteinrichtung in den Erfassungsbereich einlaufenden Stückgütern kurzzeitig reduziert wird. Dadurch wird ein bisschen Arbeitszeit gewonnen, die gegebenenfalls notwendig sein kann, um die durch den Manipulator durchzuführende längere Hubbewegung und gegebenenfalls weitere Wegstrecke zu bewältigen.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine seitliche Darstellung einer Ausführungsvariante einer erfindungsgemäßen Lagenbildungs- und Palettiervorrichtung.
Fig. 2 zeigt eine Lagenbildungs- und Palettiervorrichtung gemäß Fig. 1 von oben.
Figuren 3 bis 6 zeigen schematisch einen sinnvollen zeitlichen Ablauf eines ersten Ausführungsbeispiels eines Verfahrens, wobei in mindestens zwei parallelen Reihen zugeführte Stückgüter gemäß einem vorgegebenen Lagenschema gruppiert und/oder angeordnet werden.
Figuren 7 bis 9 zeigen schematisch einen sinnvollen zeitlichen Ablauf eines zweiten Ausführungsbeispiels des Verfahrens, wobei in mindestens zwei parallelen Reihen zugeführte Stückgüter gemäß einem vorgegebenen Lagenschema gruppiert und/oder angeordnet werden.
Figuren 10 bis 12 zeigen schematisch einen sinnvollen zeitlichen Ablauf eines dritten Ausführungsbeispiels des Verfahrens.
Figuren 13 und 14 zeigen einen sinnvollen zeitlichen Ablauf eines vierten Ausführungsbeispiels des Verfahrens.
Figuren 15 bis 17 zeigen einen sinnvollen zeitlichen Ablauf eines fünften Ausführungsbeispiels des Verfahrens.
Figuren 18 bis 19 zeigen schematisch einen sinnvollen zeitlichen Ablauf eines weiteren Ausführungsbeispiels des Verfahrens zum Umgang mit in mindestens einer Reihe hintereinander bewegten Stückgütern durch eine entsprechende Handhabungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

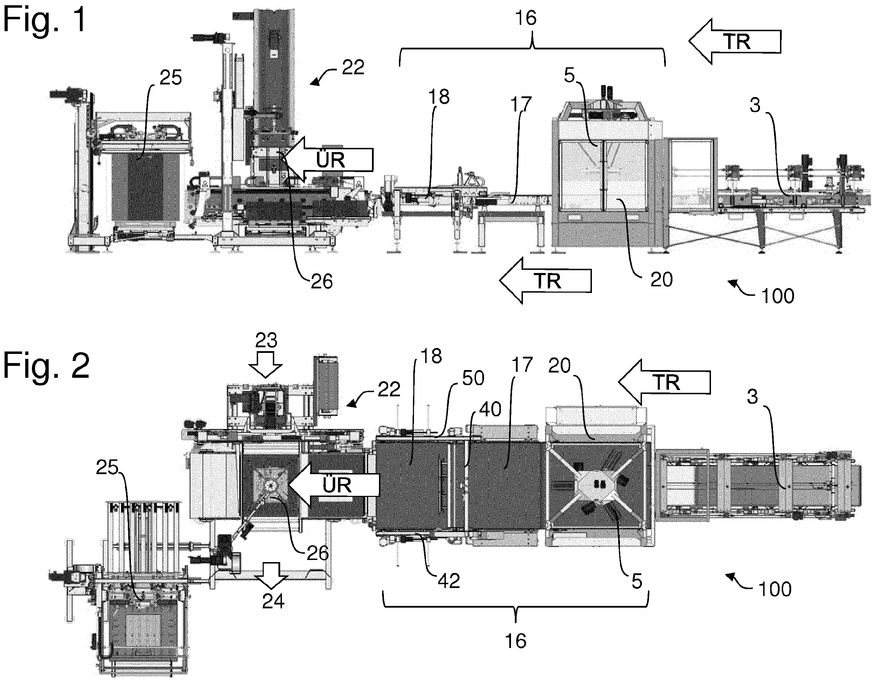

Die schematische Seitenansicht der Fig. 1 zeigt eine seitliche Darstellung einer Lagenbildungs- und Palettiervorrichtung 100, während die Draufsicht der Fig. 2 eine Darstellung der Lagenbildungs- und Palettiervorrichtung 100 von oben zeigt. Zuerst werden in den Figuren 1 und 2 noch nicht näher dargestellte Stückgüter zu einer zu palettierenden Lage zusammengestellt. Beispielsweise werden Gebinde, umfassend jeweils eine Mehrzahl von Getränkebehältern, die durch eine Umverpackung in Form einer Schrumpffolie oder durch eine Umreifung o.ä. zusammen gehalten werden, über eine Transporteinrichtung 3, beispielsweise in Gestalt einer geeigneten Fördervorrichtung, in Transportrichtung TR einem Lagenvorbereitungs- und -bereitstellungsmodul 16 zugeführt. Das Lagenvorbereitungs- und -bereitstellungsmodul 16 umfasst ein Gruppiermodul 20, in dem die Stückgüter durch mindestens einen sich innerhalb eines definierten Bewegungsraumes bewegenden geeigneten Manipulator 5 o.ä. gemäß einem gewünschten und/oder vorgegebenen Lagenschema als vorbereitete palettierfähige Lage zusammengestellt werden. Das Gruppiermodul 20 und die zuführende Transporteinrichtung 3 können beispielsweise eine Vorrichtung zum Umgang mit in mindestens einer Reihe hintereinander bewegten Stückgütern bilden, wie sie in entsprechenden Patentanmeldungen, die denselben Anmeldetag haben wie die vorliegende Anmeldung, beschrieben sind. Eine solche Vorrichtung kann in einer Reihe lückenlos zugeführte Stückgüter, beispielsweise lückenlos zugeführte Gebinde, jeweils umfassend eine Mehrzahl von durch eine Umverpackung zusammengefassten Artikeln, bearbeiten. Zudem ist eine solche Vorrichtung auch geeignet, in einer Reihe definiert zueinander beabstandete Stückgüter ebenfalls zu bearbeiten und gemäß einem gewünschten und/oder vorgegebenen Lagenschema als palettierfähige Lage zusammenzustellen.

Die Zuführung der Stückgüter zu einem Manipulator 5 des Gruppiermoduls 20 erfolgt beispielsweise über eine Fördereinrichtung bzw. Transporteinrichtung 3 mit wenigstens zwei sich in einer Transportrichtung aneinander anschließenden Transportabschnitten, wobei der erste Transportabschnitt beispielsweise durch eine Röllchenbandkette o. dgl. gebildet wird, und wobei der zweite Transportabschnitt bspw. aus einem Förderband mit einer haftenden Oberfläche wie etwa einem gummierten Förderband gebildet wird. Eine solche Transporteinrichtung wird in der Patentanmeldung mit dem Aktenzeichen DE 10 2017 207 353.5 beschrieben, deren Inhalt hiermit in diese Anmeldung aufgenommen wird und deren Inhalt dem Leser der vorliegenden Anmeldung als bekannt gelten soll.

Der mindestens eine Manipulator 5 des Gruppiermoduls 20 definiert und bildet innerhalb des Gruppiermoduls 20 den Takt der jeweils zu bearbeitenden Stückgüter, indem er die entsprechende Anzahl an Stückgütern aus der in mindestens einer Reihe lückenlos oder beabstandet zueinander einlaufenden Stückgüter abgreift. Der Manipulator 5 wird beispielsweise durch einen Parallelkinematik-Roboter oder einen Deltakinematik-Roboter gebildet, der zum Greifen, Freigeben und Drehen von Produkten bspw. eine erste Welle und eine zweite Welle aufweisen kann. Insbesondere kann der Manipulator 5 an einer Linearführung drehfest angeflanscht sein, wobei die Linearführung als erste Welle ausgebildet ist, so dass der Manipulator 5 über die erste Welle bzw. die Linearführung gedreht werden kann. Die zweite Welle bildet eine Betätigungseinrichtung, mittels welcher Klemmbacken des Manipulators 5 zum Schließen und Öffnen angesteuert werden können. Die Drehachsen der ersten Welle sowie der zweiten Welle sind identisch bzw. fallen annähernd zusammen; zudem sind sie beiden Wellen koaxial zueinander orientiert bzw. angeordnet. Die erste Welle kann vorzugsweise durch ein Hohlrohr gebildet sein, wobei die zweite Welle in dem Hohlraum der ersten Welle angeordnet ist.

Wahlweise kann der mindestens eine Manipulator 5 im Gruppiermodul 20 jedoch auch durch einen Portalroboter, durch einen Mehrachsroboter oder durch eine andere geeignete Greif- und/oder Manipulationseinrichtung gebildet sein, die in der Lage ist, in schneller Folge die heranbeförderten Stückgüter zu greifen, zu drehen, zu verschieben, anzuheben, freizugeben etc., so dass die gewünschten Lagenbilder erzeugbar sind.

Die durch eine entsprechende Handhabung der Stückgüter innerhalb des Gruppiermoduls 20 vorbereitete palettierfähige Lage kann noch Lücken zwischen den Stückgütern aufweisen, die vor der Palettierung zumindest teilweise geschlossen werden sollten, da es aus Stabilitätsgründen sowie aus Gründen der Platzersparnis nicht sinnvoll ist, nicht komplett zusammengeschobene Lagen zu palettieren. Um die Lücken zwischen den einzelnen Stückgütern zu beseitigen, wird die innerhalb des Gruppiermoduls vorbereitete palettierfähige Lage in Transportrichtung TR nacheinander einer ersten Vorgruppierung 17 und einer zweiten Vorgruppierung 18 zugeführt, wo die Stückgüter der vorbereiteten palettierfähigen Lage unter Aufhebung der zwischen den Stückgütern noch bestehenden Lücken zusammengeschoben werden und somit die gewünschte fertige palettierfähigen Lage erzeugt wird; diese Lage bzw. palettierfähige Lage wird nachfolgend auch als geschlossene Lage bezeichnet.

Insbesondere ist vorgesehen, dass die Stückgüter der durch das Gruppiermodul 20 vorbereitete palettierfähige Lage in der ersten Vorgruppierung 17 in Transportrichtung TR gegen ein sich quer zur Transportrichtung erstreckendes erstes Anschlagelement 40 geschoben werden (vgl. Fig. 2), so dass durch die Bewegung der Stückgüter in Transportrichtung TR erste Lücken zwischen den Stückgütern der vorbereiteten palettierfähigen Lage geschlossen werden und eine sogenannte komprimierte palettierfähige Lage gebildet wird. In der sich daran anschließenden zweiten Vorgruppierung 18 werden sich beidseitig parallel zur Transportrichtung erstreckende zweite Anschlagelemente 42 aufeinander zu bewegt (vgl. Fig. 2), so dass zweite Lücken zwischen den Stückgütern der komprimierten palettierfähigen Lage quer zur Transportrichtung TR geschlossen und beseitigt werden können.

Die vermittels der ersten und zweiten Vorgruppierung erzeugte fertige bzw. geschlossene palettierfähige Lage wird von der zweiten Vorgruppierung 18 in Überschubrichtung ÜR in eine Beladestation 22 übergeschoben. Die palettierfähige Lage wird auf eine Palette bzw. auf mindestens eine Oberseite einer auf einer Palette angeordneten weiteren palettierfähigen Lage angeordnet. Die hierzu notwendige Palette (nicht dargestellt) wird in Palettenzuführungsrichtung 23 in die Beladestation 22 eingeführt und in Palettenabtransportrichtung 24 aus der Beladestation 22 entfernt. Die Palettenzuführungsrichtung 23 und die Palettenabtransportrichtung 24 sind vorzugsweise geradlinig in einer Flucht und quer zur Überschubrichtung ÜR der palettierfähigen Lage innerhalb der Beladestation 22 ausgebildet.

Weiterhin umfasst die Lagenbildungs- und Palettiervorrichtung 100 vorzugsweise einen sog. Zwischenlagen-Vorseparierer 25 inklusive Magazin für Zwischenlagen und Zentriereinheit zum zentrierten Ausrichten der Zwischenlage zu der jeweiligen palettierfähigen Lage. Weiterhin kann der Beladestation 22 zudem ein Zwischenlagen-Einleger 26 zugeordnet sein, um zwischen den aufeinander zu stapelnden palettierfähigen Lagen jeweils eine Zwischenlage, beispielsweise aus einem Kartonzuschnitt o.ä., zum Schutz der jeweiligen unteren palettierfähigen Lage anzuordnen. Wahlweise können auch zunächst zwei Lagen aufeinandergestapelt werden, bevor eine darauf abzulegende dritte Lage mit einer solchen Zwischenlage von der Oberseite der zweiten Lage getrennt wird. In diesem Fall werden bspw. paarweise Lagenstapel gebildet, die jeweils in Paaren aufeinander folgender Lagen durch Zwischenlagen voneinander getrennt werden. Auch andere Trennungssystematiken mittels solcher Zwischenlagen sind denkbar, sind hier jedoch nicht näher erläutert.

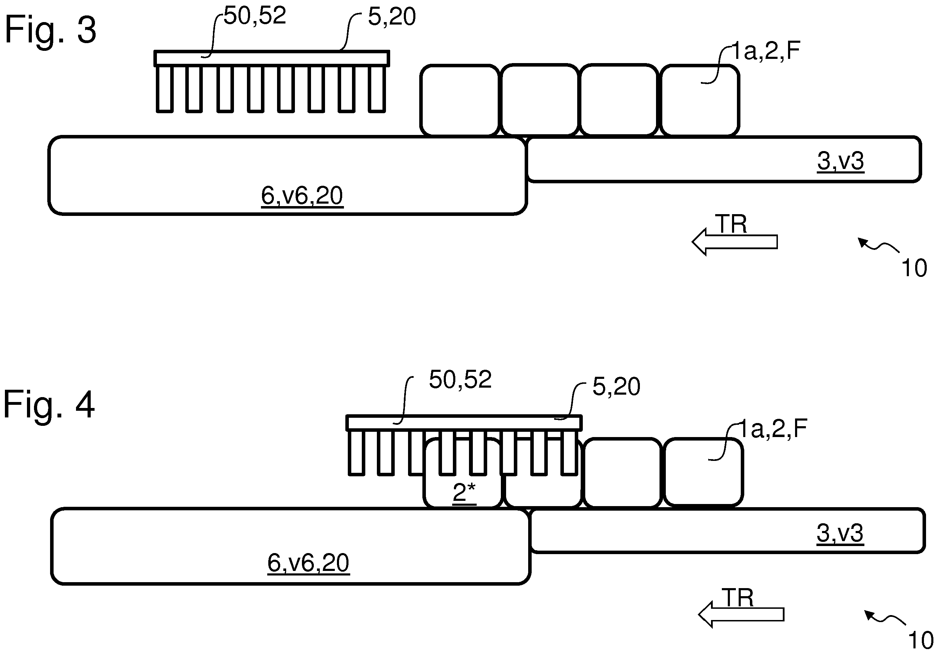

Die Figuren 3 bis 6 zeigen schematisch einen sinnvollen zeitlichen Ablauf eines ersten Ausführungsbeispiels eines Verfahrens, wobei in mindestens zwei parallelen Reihen 1a, 1b zugeführte Stückgüter 2 gemäß einem vorgegebenen Lagenschema gruppiert und/oder angeordnet werden.

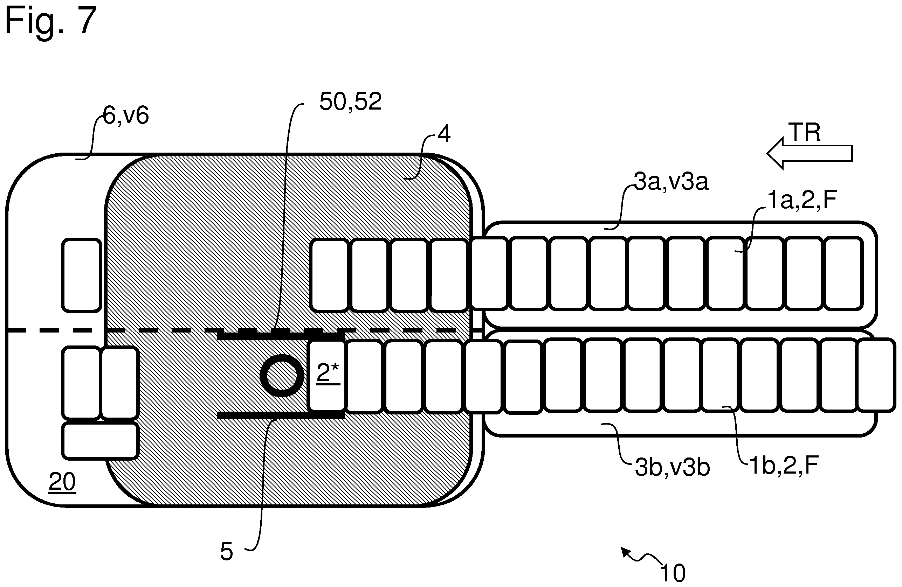

Die Handhabungsvorrichtung 10 umfasst mindestens eine erste Transporteinrichtung 3, über welche unmittelbar aufeinanderfolgende Stückgüter 2 in einer Reihe 1 unterbrechungsfrei und/oder mit kontinuierlicher Transportgeschwindigkeit v3 zu einem Gruppiermodul 20 mit mindestens einem Manipulator 5 transportiert werden, insbesondere in einen Erfassungsbereich (vgl. die Bezugsziffer 4 in Fig. 7) des mindestens einen Manipulators 5 der Handhabungsvorrichtung 10. Der Erfassungsbereich meint im vorliegenden Zusammenhang insbesondere den maximalen und/oder den jeweils programmgesteuert vorgegebenen Bewegungsraum des Manipulators 5. Der Erfassungsbereich bzw. dessen äußere räumliche Begrenzung kann dabei größer sein als es die Außengrenzen der Horizontalfördereinrichtung 6 vorgeben, auf deren ungefähr horizontalen Oberseite die Stückgüter 2 befördert und/oder mittels des Manipulators 5 positioniert und/oder verschoben werden. Normalerweise jedoch ist der Erfassungsbereich des Manipulators 5 der sinnvolle Bewegungsbereich, in dem sich zu erfassende Stückgüter 2 befinden können und/oder in dem die abzusetzenden Stückgüter 2 positioniert werden können.

Die mindestens eine Transporteinrichtung 3 ist beispielsweise mindestens ein Förderband oder mindestens eine andere geeignete Fördereinrichtung, auf der die Stückgüter 2 mindestens einreihig transportiert werden, wobei zwischen jeweils direkt aufeinander folgenden Stückgütern 2 keine bzw. nur eine geringfügige, gegebenenfalls prozessbedingte und/oder vorgegebene Lücke besteht. Insbesondere kann die Transporteinrichtung 3 durch ein endlos umlaufendes Förderband, eine endlose Förderkette o. dgl. gebildet sein, so dass damit die Stückgüter 2 zur Horizontalfördereinrichtung 6 angeliefert und heranbefördert werden können. Die in Reihe 1 auf der Transporteinrichtung 3 befindlichen Stückgüter 2 laufen vorzugsweise mit einer Transportgeschwindigkeit v3 in einer sogenannten geschlossenen Formation F in den Erfassungsbereich 4 des Manipulators 5 ein. Es kann aber auch vorgesehen sein, dass zwischen den Stückgütern 2 der mindestens einen Reihe 1 jeweils definierte Abstände ausgebildet sind. In diesem Fall spricht man von einer getakteten Formation.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter vermittels einer Umverpackung in Form einer Umreifung, einer Schrumpffolie o.ä. zu Gebinden zusammengefasst sind.

Wie bereits erwähnt, ist es optional möglich, dass die Stückgüter 2 auf einer Transporteinrichtung 3 oder auf mehreren, insbesondere parallel angeordneten Transporteinrichtungen 3 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der wenigstens einen Transporteinrichtung 3 transportiert werden.

Dem Erfassungsbereich des Manipulators ist eine Horizontalfördereinrichtung 6 zugeordnet, deren die Stückgüter 2 tragende Oberfläche sich mit einer Fördergeschwindigkeit v6 bewegt. Insbesondere kann die Fördergeschwindigkeit v6 der Horizontalfördereinrichtung 6 der Zuführgeschwindigkeit v3 der Transporteinrichtung 3 entsprechen. Wahlweise können die Zuführgeschwindigkeit v3 und die Fördergeschwindigkeit v6 auch geringfügig differieren, sofern gewährleistet werden kann, dass die ununterbrochene Förderung der Stückgüter 2 zur Horizontalfördereinrichtung 6 aufrechterhalten wird. Die in Reihe 1 bzw. Formation F über die Transporteinrichtung 3 ankommenden Stückgüter 2 können zumindest bei differierenden v3 und v6 durch den aufgrund der höheren Transportgeschwindigkeit v3 ggf. entstehenden Staudruck der nachfolgenden Stückgüter 2 auf die Horizontalfördereinrichtung 6 übergeschoben und dort unterbrechungsfrei weiter befördert werden.

Allerdings ist es hierbei notwendig, diesen Staudruck durch geeignete Maßnahmen abzubauen, bspw. mittels eines gummierten Förderbandes der Horizontalfördereinrichtung 6 und/oder mittels eines gummierten Förderbandes der Transporteinrichtung 3, wahlweise auch durch ein zwischen der Transporteinrichtung 3 und der Horizontalfördereinrichtung 6 befindliches sog. Bremsband, das durch eine die Stückgüter 2 tragende Oberfläche mit besonders hohem Reibungskoeffizienten charakterisiert ist. Diese oder andere geeignete Maßnahmen sorgen für eine präzise Positionierung der jeweiligen Stückgüter 2 am jeweiligen Erfassungsort im Erfassungsbereich, so dass eine präzise Übernahme durch den Manipulator 5 zu gewährleisten ist. Es soll jedoch betont werden, dass solche Maßnahmen zum Abbau eines ggf. vorhandenen bzw. entstandenen Staudrucks nicht wünschenswert sind, auch wenn sie je nach gewählter Konfiguration der beweglichen Teile unverzichtbar bzw. sinnvoll anzuwenden sind.

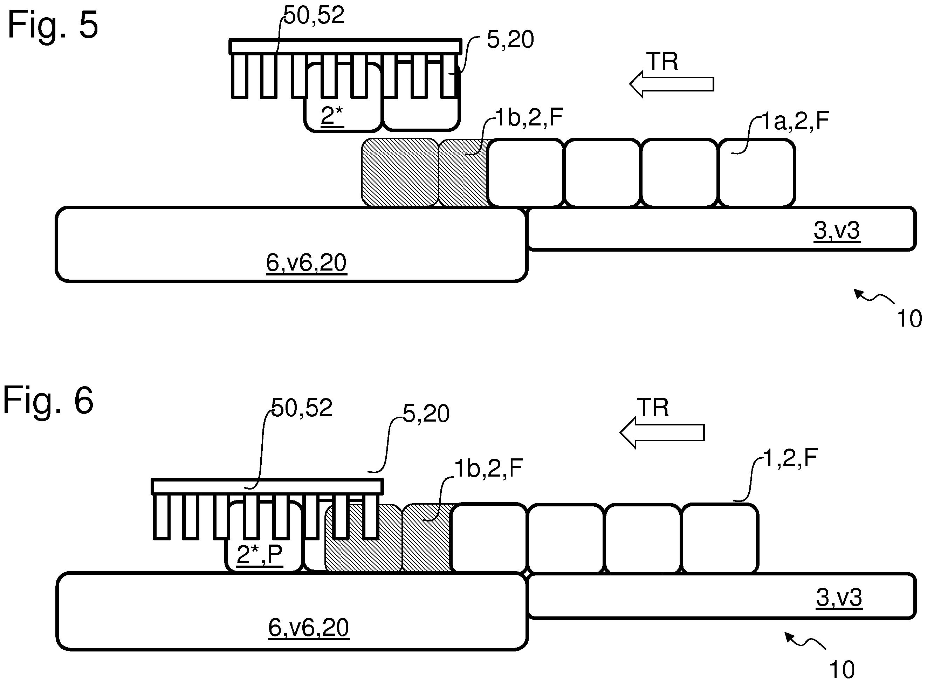

Der Manipulator 5 ist zum klemmenden und/oder formschlüssigen und/oder kraftschlüssigen Entgegennehmen von Stückgütern 2 innerhalb des Erfassungsbereichs ausgebildet und ausgestattet. Die vom Manipulator 5 erfassten Stückgüter 2 - d.h. in der Regel die in der Formation F zuvorderst einlaufenden Stückgüter 2 - werden nachfolgend zur Unterscheidung von den übrigen in der Formation F bzw. der Gesamtformation angeordneten Stückgütern 2 mit dem Bezugszeichen 2* bezeichnet. Insbesondere greift der Manipulator 5 eine gemäß einem für die Lagenbildung vorgegebenen Takt ab, wobei ein Takt eine definierte Anzahl von Stückgütern 2* umfasst. Beispielsweise greift der Manipulator 5 einen Takt umfassend mindestens ein, vorzugsweise mindestens zwei oder drei nacheinander angeordnete der in geschlossener Formation F einlaufenden Stückgüter 2*, trennt diesen von der einreihigen Formation F der Stückgüter 2 ab (vgl. Fig. 2) und überführt den Takt, d.h., das abgetrennte Stückgut 2* bzw. die abgetrennte Gruppe von zwei oder drei lückenlos in Reihe angeordneten Stückgütern 2*, jeweils in eine Zielposition P und/oder Zielausrichtung (vgl. Fig. 6). Dabei kann vorgesehen sein, dass das Stückgut 2* bzw. die Gruppe von Stückgütern 2* seitlich gegenüber der einlaufenden Formation F an Stückgütern 2 verschoben wird und/oder es kann vorgesehen sein, dass das Stückgut 2* bzw. die Gruppe von Stückgütern 2* durch den Manipulator 5 in Transportrichtung TR von der Formation F der Stückgüter 2 beabstandet wird und/oder dass das Stückgut 2* bzw. die Gruppe von Stückgütern 2* gegenüber den Stückgütern 2 der Formation F verdreht wird o.ä.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen durch den Manipulator abgegriffenen Stückgutes 2* in die Zielposition P und/oder Zielausrichtung vorgesehenen Teil des Manipulators 5 beispielsweise um einen Werkzeugkopf, einen Greiferkopf 50 o.dgl. handeln (vgl. Fig. 1), der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes 50 (auch: des Manipulators 5), der die Stückgüter 2* in der gewünschten Weise erfassen, verschieben, positionieren, platzieren, drehen etc. kann, um die jeweiligen Zielpositionen P und/oder Zielausrichtungen für die Stückgüter 2* anfahren zu können. Ebenso denkbar sind jedoch auch andere geeignete Manipulatorkonfigurationen, bspw. solche mit Portalroboter- Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Der Manipulator 5 kann in diesem Ausführungsbeispiel und/oder im Zusammenhang mit der gesamten vorliegenden Erfindung bspw. durch einen Greiferkopf 50 mit seitlichen Klemmbacken 52 o.ä. gebildet sein oder einen solchen Greiferkopf 50 mit seitlichen Klemmbacken 52 umfassen, welche typischerweise beim Erfassen der Stückgüter 2* gegeneinander zustellbar sind, um die Stückgüter 2* form- und/oder kraftschlüssig zu erfassen bzw. zu klemmen, wogegen die Klemmbacken 52 beim Erreichen der Zielposition P und7oder Zielausrichtung jeweils wieder geöffnet werden können. Wenn im vorliegenden Zusammenhang bzw. bei der vorliegenden Beschreibung daher von einem Manipulator 5 und/oder von einem Greifer oder Greiferkopf 50 die Rede ist, so können diese Begriffe als Synonyme verwendet sein; ggf. ist der Greifer oder Greiferkopf 50 auch als Unterbaugruppe oder Bestandteil des umfassender zu verstehenden Manipulators 5 anzusehen.

Bei dem in den Figuren 3 bis 6 in seitlicher Ansicht dargestellten Ausführungsbeispiel greift der Manipulator zwei Stückgüter 2 der im Bild vorderen Reihe 1a ab (Fig. 4) und hebt diese über die Stückgüter 2 einer parallelen, nur in den Figuren 5 und 6 sichtbaren Reihe 1b hinweg (Fig. 5), um die erfassten Stückgüter 2* der Reihe 1a in eine Zielposition P und/oder Zielanordnung zu verbringen, die sich in Transportrichtung TR rechts von der Reihe 1b befindet auf der Horizontalfördereinrichtung 6 befindet (Fig. 6).

Dies kann beispielsweise dann vorteilhaft eingesetzt werden, wenn bei einem mehrreihigen Zulauf durch den Manipulator 5 Stückgüter 2 beispielsweise mehrfach von derselben Reihe 1a oder 1b abgegriffen werden.

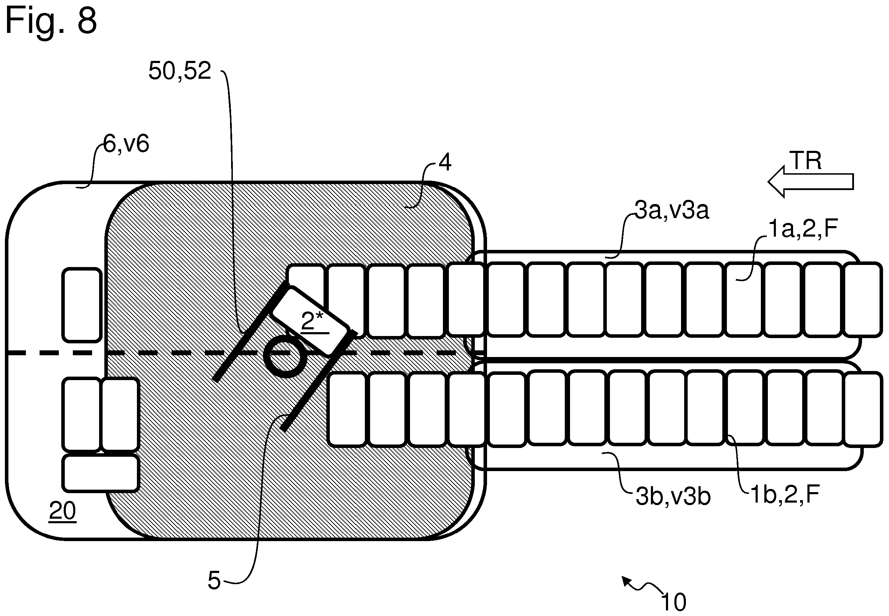

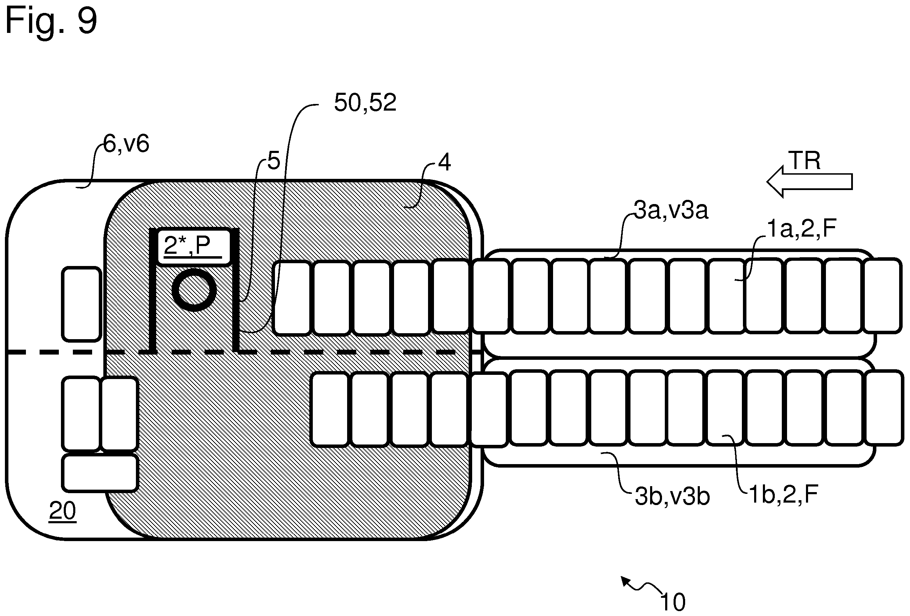

Die Figuren 7 bis 9 zeigen schematisch einen sinnvollen zeitlichen Ablauf eines zweiten Ausführungsbeispiels eines Verfahrens, wobei in mindestens zwei parallelen Reihen 1a, 1b über zwei Transporteinrichtungen 3a, 3b in zwei Reihen 1a, 1b zugeführte Stückgüter 2 gemäß einem vorgegebenen Lagenschema gruppiert und/oder angeordnet werden. Der Manipulator greift ein Stückgut 2 der in Transportrichtung TR links angeordneten Reihe 1b ab (vgl. Fig. 7) und überführt dieses erfasste Stückgut 2* in eine Zielposition P und Zielanordnung, die sich in Transportrichtung TR gesehen auf der rechten Seite der rechten Reihe 1a befindet (Fig. 9).

Dabei wird das erfasste Stückgut 2* durch den Manipulator 5 derart angehoben, dass es über die weiter in den Erfassungsbereich 4 einlaufenden Stückgüter 2 der rechten Reihe 1a bewegt werden kann, ohne mit diesen zu kollidieren. Zeitgleich wird das erfasste Stückgut 2* durch den Manipulator 5 um 90° entgegen dem Uhrzeigersinn gedreht, so dass die Zielanordnung des Stückgutes 2* in der Zielposition P gemäß Fig. 9 um 90° verdreht gegenüber der Ausgangsausrichtung der nachfolgenden Stückgüter 2 der Reihe 1b ist. Durch das deutliche Anheben mindestens eines erfassten Stückgutes 2* um eine vertikale Strecke, die zumindest geringfügig größer ist als die jeweilige Höhe der bearbeiteten Stückgüter 2, ist es möglich, erfasste Stückgüter 2* über einlaufende Stückgüter 2 einer Parallelreihe 1a zu heben. Dadurch erhöht sich die Anzahl der möglichen Zielpositionen, in die die erfassten Stückgüter 2* verbracht werden können deutlich, da diese nicht auf Zielpositionen in Transportrichtung fluchtend oder seitlich zur Ausgangsreihe 1b beschränkt sind.

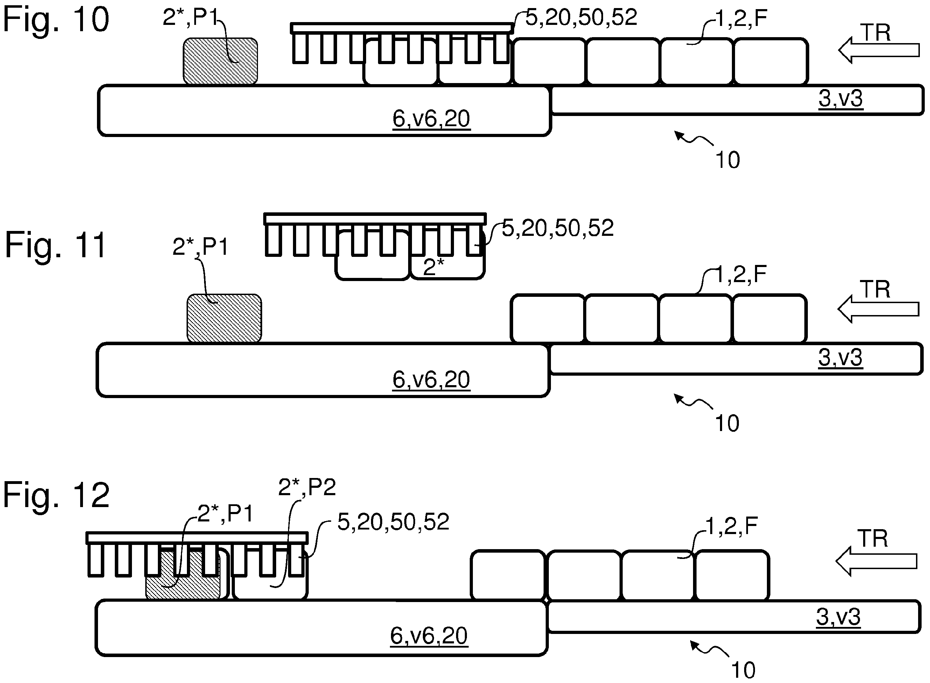

Die Figuren 10 bis 12 zeigen schematisch einen sinnvollen zeitlichen Ablauf eines dritten Ausführungsbeispiels eines Verfahrens. In diesem Fall ist ein einreihiger Zulauf an Stückgütern 2 in geschlossener Formation F über eine Transporteinrichtung 3 dargestellt. Ein erstes Stückgut 2* befindet sich bereits in einer Zielposition P1 auf der Horizontalfördereinrichtung 6. Die Zielposition P1 befindet sich beispielsweise in Transportrichtung TR vor und fluchtend zur Reihe 1 der nachlaufenden Stückgüter 2. Das Stückgut 2* in der Zielposition P1 ist identisch zu den nachlaufenden Stückgütern 2 der Reihe 1 ausgebildet; zum besseren Verständnis und zur verbesserten Übersichtlichkeit der Figuren ist das Stückgut 2* in Zielposition P1 schraffiert dargestellt.

Der Manipulator 5 greift weitere zwei Stückgüter 2* der Reihe 1 ab (Fig. 10), hebt diese an und verbringt die beiden Stückgüter 2* in eine Zielposition P2, die sich in Transportrichtung TR gesehen seitlich nach rechts versetzt zur Zielposition P1 und zu den nachlaufenden Stückgütern 2 der Reihe 1 befindet. Dabei werden die beiden vom Manipulator 5 erfassten Stückgüter 2 derart angehoben, dass sie über das in Zielposition P1 befindliche Stückgut 2* gehoben werden.

Mit dem hier beschriebenen Verfahren können somit durch den Manipulator 5 auch Stückgüter 2* über bereits manipulierte, d.h. gemäß einem vorgegebenen Lagenschema bereit in einer Zielposition P1 und/oder Zielanordnung befindliche, Stückgüter 2* gehoben und in Transportrichtung TR vor oder seitlich zu diesen angeordnet werden. Auch hierbei sind weitere, ggfl. überlagerte Bewegungen des Manipulators 5 möglich, die die erfassten Stückgüter 2* in eine gewünschte Zielanordnung überführen

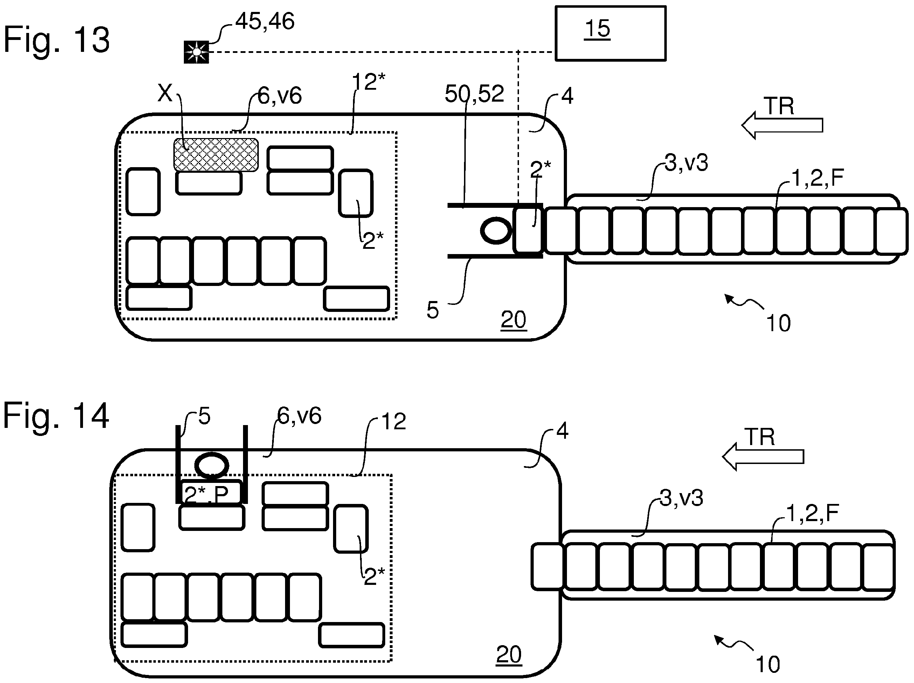

Die Figuren 13 und 14 zeigen einen sinnvollen zeitlichen Ablauf eines vierten Ausführungsbeispiels eines Verfahrens. Hierbei ist eine sensorische Lagenerkennung innerhalb des Gruppiermoduls 20 vorgesehen. Ein geeigneter Sensor 45, beispielsweise ein Bilderkennungssensor 46 erfasst die durch den Manipulator 5 innerhalb des Gruppiermoduls 20 erstellte Lagenanordnung 12 (vgl. Fig. 14). Gemäß Fig. 13 wurde eine fehlerhafte Lagenanordnung 12* ausgebildet, bei der an der mit Schraffur gekennzeichneten Fehlerposition X ein Stückgut 2 fehlt. Der Sensor 45 übermittelt die erfassten Daten an die Steuereinheit 15, die das erfasste Lagenbild 12* mit dem gewünschten Lagenbild 12 (vgl. Fig. 14) abgleicht. Bei einer Abweichung zwischen dem erfassten Lagenbild 12* und dem gewünschten Lagenbild 12 ermittelt die Steuereinheit 15 die Anzahl und Position der fehlenden Stückgüter sowie einen korrigierenden Arbeits- und/oder Bewegungsablauf für den Manipulator 5. Anschließend steuert die Steuereinheit 15 den Manipulator 5 derart an, dass dieser eine entsprechende Anzahl an Stückgütern 2* von der Reihe 1 der nachlaufenden Stückgüter 2 abgreift und in die berechnete Fehlerposition X einsetzt. Hierzu ist es in der Regel notwendig, das mindestens eine für die Korrektur des fehlerhaften Lagenbildes 12* notwendige vom Manipulator 5 erfasste Stückgut 2* über zumindest einen Teil der bereits innerhalb der Lagenanordnung 12* korrekt positionierten Stückgüter 2* hinweg zu heben, um Kollisionen mit diesen zu vermeiden.

Das hier beschriebene Verfahren kann somit auch vorteilhaft genutzt werden, um ungewünschte Lücken in der Lagenanordnung 12* der Stückgüter 2* vor dem Überführen der Lage 12 zu weiterverarbeitenden Maschinen (vgl. Figuren 1 und 2) zu schließen.

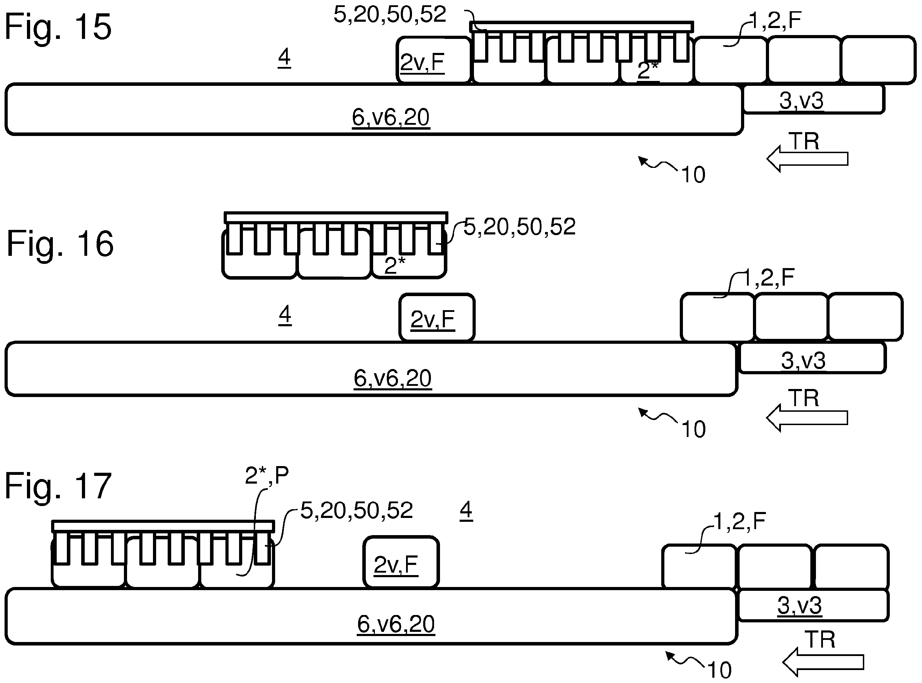

Die Figuren 15 bis 17 zeigen einen sinnvollen zeitlichen Ablauf eines fünften Ausführungsbeispiels eines Verfahrens. Hierbei ist eine einreihige Zuführung an Stückgütern 2 über eine Transporteinrichtung 3 zum Gruppiermodul 20 dargestellt und es wird das zuvorderst in den Erfassungsbereich 4 des Manipulators 5 einlaufende Stückgut 2v, das zuvor noch nicht durch den Manipulator 5 erfasst und positioniert wurde und das sich in Transportrichtung TR fluchtend zu der dem Gruppiermodul 20 vorgeordneten Transporteinrichtung 3 bewegt und von dieser an die Horizontalfördereinrichtung 6 des Gruppiermoduls 20 übergeben wurde, von einer Gruppe umfassend drei durch den Manipulator 5 erfassten dem zuvordersten Stückgut 2v nachlaufenden Stückgütern 2* überhoben.

Die vom Manipulator 5 erfassten drei Stückgüter 2* werden beispielsweise in eine Zielposition P abgesetzt, die sich in Transportrichtung TR fluchtend vor dem zuvordersten Stückgut 2v auf der Horizontalfördereinrichtung 6 befindet. Es kann aber auch gemäß der gewünschten Lagenanordnung sinnvoll sein, die Stückgüter 2* seitlich versetzt zu dem zuvordersten Stückgut 2v auf der Horizontalfördereinrichtung 6 anzuordnen. Zusätzlich kann die Gruppe der drei Stückgüter 2* vor dem Positionieren auf der Horizontalfördereinrichtung 6 noch durch den Manipulator 5 gedreht und somit in eine neue Zielausrichtung gebracht werden.

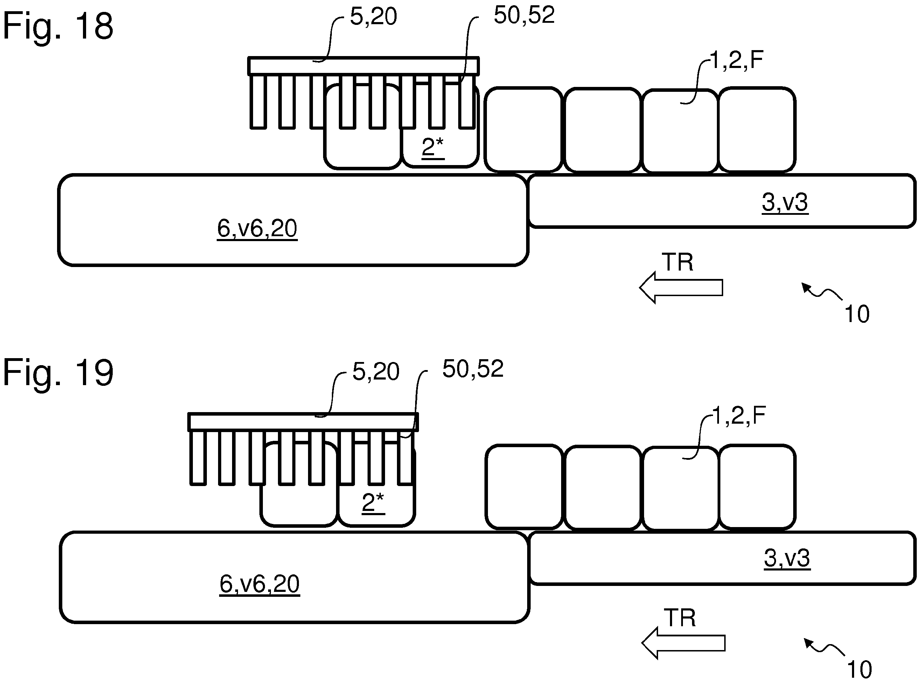

Die Figuren 18 und 19 zeigen schematisch einen sinnvollen zeitlichen Ablauf eines weiteren Ausführungsbeispiels eines Verfahrens zum Umgang mit in mindestens einer Reihe 1 hintereinander bewegten Stückgütern 2 durch eine entsprechende Handhabungsvorrichtung 10.

Da sich beim Verschieben der Stückgüter 2* durch den Manipulator 5 Reibungseffekte allen Trägheitskräften bei den Manipulatorbewegungen überlagern, und da sich die Reibungskräfte je nach den veränderlichen Umgebungsbedingungen und ggf. sich verändernden Oberflächenbeschaffenheiten an den Grenzflächen der sich relativ zueinander bewegenden Teile ändern können, während die Trägheitskräfte im Wesentlichen nur von den bewegten Massen und Schwerpunkten der Stückgüter 2* abhängig sind, ist vorgesehen, dass der Manipulator 5 nach dem Abgreifen einer entsprechend dem zu erstellenden Lagenschema notwendige Anzahl von Stückgütern 2* diese zumindest kurzzeitig und um einen geringen Betrag anhebt. Dabei wird insbesondere der Auflagekontakt zur Oberseite der Horizontalfördereinrichtung 6 aufgehoben und der Manipulator 5 kann die erfassten Stückgüter 2* einfacher in die gewünschte Zielposition (nicht dargestellt) verbringen. Hierfür ist eine geringe Vertikalbewegung des Manipulators 5 zusammen mit den erfassten Stückgütern 2* ausreichend. Insbesondere können die erfassten Stückgüter 2* nunmehr reibungsfrei in die Zielposition und/oder Zielanordnung verbracht werden.

Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1, 1a, 1b: Reihe
- 2, 2*: Stückgut
- 2v: zuvorderst einlaufendes Stückgut
- 3, 3a, 3b: Transporteinrichtung
- 4: Bearbeitungs- oder Erfassungsbereich
- 5: Manipulator
- 6: Horizontalfördereinrichtung
- 10: Handhabungsvorrichtung
- 12: Lagenanordnung, Lage
- 12*: fehlerhafte Lagenanordnung
- 15: Steuereinheit
- 16: Lagenvorbereitungs- und -bereitstellungsmodul
- 17: erste Vorgruppierung
- 18: zweite Vorgruppierung
- 20: Gruppiermodul
- 22: Beladestation
- 23: Palettenzuführungsrichtung
- 24: Palettenabtransportrichtung
- 25: Zwischenlagen-Vorseparierer
- 26: Zwischenlagen-Einleger
- 40: erstes Anschlagelement
- 42: zweites Anschlagelement
- 45: Sensor
- 46: Bilderkennungssensor
- 50: Greiferkopf
- 52: Klemmbacke
- 100: Lagenbildungs- und Palettiervorrichtung

- F: Formation
- P, P1, P2: Zielposition
- TR: Transportrichtung
- ÜR: Überschubrichtung
- v3: Zuführgeschwindigkeit
- v6: Fördergeschwindigkeit
- X: Fehlerposition

## Patentansprüche

1. Verfahren zur Handhabung von Stückgütern (2) bei und/oder im Zusammenhang mit deren Gruppierung und/oder deren Lagenbildung, insbesondere zum Zwecke der Ausbildung von aus jeweils mehreren Stückgütern (2) bestehenden palettierfähigen Lagen (12),
- wobei das Verfahren die ein- oder mehrreihige Förderung der Stückgüter (2) mittels wenigstens einer Transporteinrichtung (3) in einer Transportrichtung (TR) in jeweils geschlossener und/oder lückenloser Formation (F) oder in Formation mit jeweils zwischen den Stückgütern (2) bestehenden Lücken zu einem Gruppiermodul (20) mit wenigstens einer Horizontalfördereinrichtung (6) sowie mindestens einem Manipulator (5) vorsieht,
- wobei die Stückgüter (2) mit dem sich innerhalb eines Erfassungsbereiches (4) innerhalb des Gruppiermoduls (20) bewegenden Manipulator (5) von der wenigstens einen geschlossenen Formation (F) oder lückenbehafteten Formation einzeln oder in Gruppen von zwei oder mehr Stückgütern (2) nacheinander erfasst und durch Drehen und/oder Verschieben und/oder Heben in eine definierte Lagenanordnung (12) gebracht werden,
- wonach die in die Lagenanordnung (12) gebrachten Stückgüter (2) in Transportrichtung (TR) zu dem Gruppiermodul (20) nachgeordneten weiteren Handhabungs-, Stapel- und/oder Palettiermodulen weiterbefördert werden,
**dadurch gekennzeichnet, dass**
wenigstens einer der in zeitlicher Folge nacheinander zur Bildung einer definierten Lagenanordnung (12) innerhalb des Gruppiermoduls (20) durchgeführten Handhabungsschritte des Erfassens, Drehens, Verschiebens und/oder Hebens wenigstens eines Stückgutes (2) das Anheben und Überheben des jeweiligen mindestens einen Stückgutes (2) über mindestens ein weiteres im Erfassungsbereich (4) befindliches Stückgut (2*), das zuvor bereits vom Manipulator (5) erfasst und verschoben, gedreht und/oder angehoben und dabei zur Lagenbildung neu positioniert wurde, vorsieht, wobei das durch den Manipulator (5) mindestens eine erfasste Stückgut (2) derart über das weitere im Erfassungsbereich (4) befindliche Stückgut (2*) gehoben wird, dass es sich in Transportrichtung (TR) vor oder seitlich versetzt zu dem bereits positionierten Stückgut (2) befindet.

2. Verfahren nach Anspruch 1, bei dem das mindestens eine vom Manipulator (5) erfasste Stückgut (2) während seiner Positionierung durch den Manipulator (5) mit einer Bewegungskomponente quer zur Transportrichtung (TR) bewegt und dabei in eine Höhe gehoben wird, die eine Kollision mit dem überhobenen mindestens einen Stückgut (2) vermeidet.

3. Verfahren nach Anspruch 1 oder 2, bei dem mindestens ein Stückgut (2) im Erfassungsbereich (4) mit einem vom Manipulator (5) erfassten und zu positionierenden Stückgut (2) oder mehreren zu positionierenden Stückgütern überhoben wird, das zuvor noch nicht positioniert wurde und sich in Transportrichtung (TR) fluchtend zu einer dem Gruppiermodul (20) vorgeordneten Transporteinrichtung (3) bewegt, von der es an eine Horizontalfördereinrichtung (6) des Gruppiermoduls (20) übergeben wurde.

4. Verfahren nach Anspruch 3, bei dem mindestens ein Stückgut, das von einer ersten von mehreren parallelen Transporteinrichtungen (3) in den Erfassungsbereich (4) des Manipulators (5) des Gruppiermoduls (20) gelangt und das zuvor noch nicht positioniert wurde und sich in Transportrichtung (TR) fluchtend zu der dem Gruppiermodul (20) vorgeordneten Transporteinrichtung (3) bewegt, mit einem vom Manipulator (5) erfassten und zu positionierenden Stückgut (2) oder mehreren zu positionierenden Stückgütern überhoben wird, das/die von einer zur ersten Transporteinrichtung (3) parallelen zweiten Transporteinrichtung (3) in den Erfassungsbereich (4) des Manipulators (5) transportiert wird/werden.

5. Verfahren nach einem der Ansprüche 1 bis 4, bei dem die im Erfassungsbereich (4) befindlichen Stückgüter (2) hinsichtlich ihrer Positionen und/oder auf das Vorhandensein von Lücken zwischen aufeinanderfolgend transportierten Stückgütern (2) sensorisch erfasst werden, wobei mittels mindestens eines Sensors (45) ermittelt wird, ob sich zwischen aufeinanderfolgenden Stückgütern (2) im Erfassungsbereich (4) des Manipulators (5) Lücken befinden.

6. Verfahren nach Anspruch 5, bei dem nach Erkennung einer ausreichend großen Lücke zwischen aufeinanderfolgenden Stückgütern (2) im Erfassungsbereich (4) ein weiteres Stückgut (2) in die Lücke eingefügt und/oder unter Überheben weiterer Stückgüter (2) in die Lücke von oben her hineingesenkt wird.

7. Verfahren nach Anspruch 5 oder 6, bei dem der Sensor (45) entsprechende Signale an eine Steuereinheit (15) übermittelt, welche die Bewegungen des Manipulators (5) bei der Herstellung der Lagenanordnungen (12) steuert.

8. Verfahren nach einem der Ansprüche 1 bis 7, wobei synchron zum Anheben und Überheben des jeweiligen mindestens einen Stückgutes (2) über mindestens ein weiteres im Erfassungsbereich (4) befindliches Stückgut (2) eine zumindest kurzzeitige Verzögerung der Zuführgeschwindigkeit (v3) der mindestens einen Transporteinrichtung (3) und/oder eine zumindest kurzzeitige Verzögerung der Fördergeschwindigkeit (v6) der Horizontalfördereinrichtung erfolgt.

9. Vorrichtung (10) zur Durchführung eines Verfahrens nach einem der Ansprüche 1 bis 8 zur Handhabung von Stückgütern (2) bei und/oder im Zusammenhang mit deren Gruppierung und/oder deren Lagenbildung, insbesondere zum Zwecke der Ausbildung von aus jeweils mehreren Stückgütern (2) bestehenden palettierfähigen Lagen (12), die Vorrichtung (10) umfassend
- ein Gruppiermodul (20) mit wenigstens einer Horizontalfördereinrichtung (6) sowie mindestens einem Manipulator (5),
- eine Transporteinrichtung (3) für die ein- oder mehrreihige Förderung der Stückgüter (2) in einer Transportrichtung (TR) in jeweils geschlossener und/oder lückenloser Formation oder in Formation mit jeweils zwischen den Stückgütern bestehenden Lücken zu dem Gruppiermodul,
- mindestens einen Sensor (45) zum Erfassen der im Erfassungsbereich (4) des Manipulators (5) befindlichen Stückgüter (2) hinsichtlich ihrer Positionen;
- eine Steuereinheit (15), wobei der mindestens eine Sensor (45) entsprechende Signale an die Steuereinheit (15) übermittelt, welche die Bewegungen des Manipulators (5) nach dem Verfahren gemäß einem der Ansprüche 1 bis 8 steuert,
- ein weiteres Handhabungs-, Stapel- und/oder Palettiermodul, das dem Gruppiermodul (20) in Transportrichtung TR) nachgeordnet ist, wobei die in die Lagenanordnung (12) gebrachten Stückgüter (2) in Transportrichtung (TR) zu dem weiteren Handhabungs-, Stapel- und/oder Palettiermodul weiterbefördert werden.

10. Vorrichtung (10) nach Anspruch 9, wobei mittels des mindestens einen Sensors (45) ermittelt wird, ob sich zwischen aufeinanderfolgenden Stückgütern (2) im Erfassungsbereich (4) des Manipulators (5) Lücken befinden.

## Claims

1. A method for handling piece goods (2) during and/or in the context of grouping the piece goods (2) and/or forming layers thereof, in particular for the purpose of forming palletisable layers (12) that each consist of a plurality of piece goods (2),
- wherein the method provides a single- or multiple-row conveyance of the piece goods (2) by means of at least one transport device (3) in a transport direction (TR), in each case in closed and/or unspaced formation (F), or in a formation with spaces in each case between the piece goods (2), to a grouping module (20) with at least one horizontal conveyor (6) and with at least one manipulator (5),
- wherein the piece goods (2) are successively seized, individually or in groups of two or more piece goods (2), by the manipulator (5) moving within a seizing range (4) within the grouping module (20) from the at least one closed formation (F) or the formation with spaces present, and are brought into a defined layer arrangement (12) by being rotated and/or shifted and/or lifted,
- whereupon the piece goods (2), having been brought into the layer arrangement (12), are conveyed further in transport direction (TR) to further handling modules, stacking modules, and/or palletising modules arranged downstream from the grouping module (20),
**characterised in that**
at least one of the handling steps of seizing, rotating, shifting, and/or lifting at least one piece good (2), the handling steps being carried out within the grouping module (20) temporally successively one after the other in order to form a defined layer arrangement (12), provides at least one particular piece good (2) to be lifted up and lifted over at least one other piece good (2*) located in the seizing range (4), which other piece good (2*) has already previously been seized and shifted, rotated and/or lifted by the manipulator (5) and thereby repositioned for layer formation, wherein the at least one piece good (2) seized by the manipulator (5) is lifted over the other piece good (2*) located in the seizing range (4) in such a manner that it is located in transport direction (TR) in front of or laterally offset to the already positioned piece good (2).

2. The method according to claim 1, in which the at least one piece good (2) seized by the manipulator (5) is moved with a movement component transverse to the transport direction (TR) while being positioned by the manipulator (5), and is in this context lifted to a height that prevents a collision with the at least one piece good (2) that it is being lifted over.

3. The method according to claim 1 or 2, in which at least one manipulator-seized piece good (2) to be positioned or a plurality of manipulator-seized piece goods (2) to be positioned is or are lifted over at least one piece good (2) in the seizing range (4), which piece good (2) has not yet been previously positioned, and which piece good (2) is moving in transport direction (TR) in alignment with a transport device (3) arranged upstream from the grouping module (20) by which it has been delivered to a horizontal conveyor (6) of the grouping module (20).

4. The method according to claim 3, in which at least one manipulator-seized piece good (2) to be positioned or a plurality of manipulator-seized piece goods (2) to be positioned, which is/are being transported from a second transport device (3) parallel to the first transport device (3) into the seizing range (4) of the manipulator (5), is or are lifted over at least one piece good (2) coming from a first of a plurality of parallel transport devices (3) into the seizing range (4) of the manipulator (5) of the grouping module (20), which piece good (2) has not yet been previously positioned, and which piece good (2) is moving in transport direction (TR) in alignment with the transport device (3) arranged upstream from the grouping module (20).

5. The method according to one of the claims 1 to 4, in which the piece goods (2) located in the seizing range (4) are sensor-detected in terms of their positions and/or the presence of spaces between consecutively transported piece goods (2), wherein it is determined by at least one sensor (45) whether there are spaces between successive piece goods (2) in the seizing range (4) of the manipulator (5).

6. The method according to claim 5, in which, after identification of a sufficiently large space between successive piece goods (2) in the seizing range (4), a further piece good (2) is inserted into the space and/or lowered into the space from above by being lifted over other piece goods (2).

7. The method according to claim 5 or 6, in which the sensor (45) transmits appropriate signals to a control unit (15) controlling the movements of the manipulator (5) in the production of the layer arrangements (12).

8. The method according to one of the claims 1 to 7, wherein the feed speed (v3) of the at least one transport device (3) is at least briefly decelerated and/or the conveying speed (v6) of the horizontal conveying device is at least briefly decelerated synchronously with lifting up the particular at least one piece good (2) and lifting it over at least one other piece good (2) located in the seizing range (4).

9. An apparatus (10) for carrying out a method according to any of the claims 1 to 8 for handling piece goods (2) during and/or in the context of grouping the piece goods (2) and/or forming layers thereof, in particular for the purpose of forming palletisable layers (12) that each consist of a plurality of piece goods (2),
the apparatus (10) comprising
- a grouping module (20) with at least one horizontal conveyor (6) and at least one manipulator (5),
- a transport device (3) for the single- or multiple-row conveyance of the piece goods (2), in each case in closed and/or unspaced formation, or in a formation with spaces in each case between the piece goods, in a transport direction (TR) to the grouping module (20),
- at least one sensor (45) for detecting the piece goods (2) located in the seizing range (4) of the manipulator in terms of their positions;
- a control unit (15), wherein the at least one sensor (45) transmits appropriate signals to the control unit (15) that control the movements of the manipulator (5) of the method according to any one of claims 1 to 8,
- a further handling module, stacking module, and/or palletising module arranged downstream in transport direction (TR) from the grouping module (20), wherein the piece goods (2), having been brought into the layer arrangement (12), are conveyed further in transport direction (TR) to the further handling module, stacking module, and/or palletising module.

10. The apparatus (10) according to claim 9, wherein it is determined by the at least one sensor (45) whether there are spaces between successive piece goods (2) in the seizing range (4) of the manipulator (5).

## Revendications

1. Procédé de manipulation de produits de détail (2) dans et/ou en relation avec leur groupement et/ou leur formation de couches, en particulier en vue de la formation de couches palettisables (12) constituées chacune de plusieurs produits de détail (2),
- dans lequel le procédé prévoit le transport en une ou plusieurs rangée(s) des produits de détail (2) au moyen d'au moins un dispositif de transport (3) dans une direction de transport (TR) dans une formation (F) respectivement fermée et/ou ininterrompue ou dans une formation ayant des lacunes existant respectivement entre les produits de détail (2), vers un module de groupement (20) comprenant au moins un dispositif de transport horizontal (6) ainsi qu'au moins un manipulateur (5),
- dans lequel les produits de détail (2) sont saisis les uns après les autres par le manipulateur (5) se déplaçant à l'intérieur d'une zone de saisie (4) à l'intérieur du module de groupement (20), de ladite au moins une formation fermée (F) ou formation à lacunes, soit individuellement soit par groupes de deux ou plusieurs produits de détail (2), et sont amenés dans un agencement en couches (12) défini en les tournant et/ou déplaçant et/ou soulevant,
- ce après quoi les produits de détail (2) amenés dans l'agencement en couches (12) sont transportés dans la direction de transport (TR) vers d'autres modules de manipulation, d'empilage et/ou de palettisation disposés en aval du module de groupement (20),
**caractérisé par le fait que**
au moins une des étapes de manipulation consistant à saisir, à faire tourner, à déplacer et/ou à soulever au moins un produit de détail (2) et mises en oeuvre les unes après les autres pour former un agencement en couches (12) défini à l'intérieur du module de groupement (20) prévoit le levage et l'action de soulever ledit au moins un produit de détail (2) respectif par-dessus au moins un autre produit de détail (2*) qui se trouve dans la zone de saisie (4) et qui a été déjà saisi et déplacé, tourné et/ou soulevé par le manipulateur (5) et ainsi été repositionné pour la formation de couches, dans lequel ledit au moins un produit de détail (2) saisi par le manipulateur (5) est soulevé par-dessus l'autre produit de détail (2*) se trouvant dans la zone de saisie (4) de manière à ce qu'il se trouve, dans la direction de transport (TR), devant ou décalé latéralement par rapport au produit de détail (2) déjà positionné.

2. Procédé selon la revendication 1, dans lequel ledit au moins un produit de détail (2) saisi par le manipulateur (5) est déplacé avec une composante de mouvement transversalement à la direction de transport (TR) lorsqu'il est positionné par le manipulateur (5), et est, ce faisant, soulevé à une hauteur permettant d'éviter une collision avec ledit au moins un produit de détail (2) par-dessus lequel il est soulevé.

3. Procédé selon la revendication 1 ou 2, dans lequel un produit de détail (2) saisi et à positionner par le manipulateur (5) ou plusieurs produits de détail à positionner est/sont soulevé(s), dans la zone de saisie (4), par-dessus au moins un produit de détail (2) qui n'a pas encore été positionné auparavant et qui se déplace dans la direction de transport (TR) en alignement avec un dispositif de transport (3) qui est disposé en amont du module de groupement (20) et à partir duquel il a été transféré à un dispositif de transport horizontal (6) du module de groupement (20).

4. Procédé selon la revendication 3, dans lequel un produit de détail (2) saisi et à positionner par le manipulateur (5) ou plusieurs produits de détail à positionner qui est/sont transporté(s) par un deuxième dispositif de transport (3) parallèle à un premier dispositif de transport (3) dans la zone de saisie (4) du manipulateur (5), est/sont soulevé(s) par-dessus au moins un produit de détail qui atteint, à partir du premier parmi une pluralité de dispositifs de transport (3) parallèles, la zone de saisie (4) du manipulateur (5) du module de groupement (20) et qui n'a pas encore été positionné auparavant et se déplace dans la direction de transport (TR) en alignement avec le dispositif de transport (3) disposé en amont du module de groupement (20).

5. Procédé selon l'une quelconque des revendications 1 à 4, dans lequel les produits de détail (2) se trouvant dans la zone de saisie (4) sont détectées par capteur en ce qui concerne leurs positions et/ou la présence de lacunes entre des produits de détail (2) successivement transportés, dans lequel il est déterminé au moyen d'au moins un capteur (45) s'il existe des lacunes entre des produits de détail (2) successifs dans la zone de saisie (4) du manipulateur (5).

6. Procédé selon la revendication 5, dans lequel, après avoir détecté une lacune suffisamment grande entre des produits de détail (2) successifs dans la zone de détection (4), un autre produit de détail (2) est inséré dans la lacune et/ou est abaissé d'en haut dans la lacune en étant soulevé par-dessus d'autres produits de détail (2).

7. Procédé selon la revendication 5 ou 6, dans lequel le capteur (45) transmet des signaux correspondants à une unité de commande (15) qui commande les mouvements du manipulateur (5) lors de la réalisation des agencements en couches (12).

8. Procédé selon l'une quelconque des revendications 1 à 7, dans lequel, de manière synchrone avec le levage et l'action de soulever ledit au moins un produit de détail (2) respectif par-dessus au moins un autre produit de détail (2) se trouvant dans la zone de saisie (4), il se produit un retard au moins de courte durée de la vitesse d'alimentation (v3) dudit au moins un dispositif de transport (3) et/ou un retard au moins de courte durée de la vitesse de transport (v6) du dispositif de transport horizontal.

9. Dispositif (10) de mise en oeuvre d'un procédé selon l'une quelconque des revendications 1 à 8, de manipulation de produits de détail (2) dans et/ou en relation avec leur groupement et/ou leur formation de couches, en particulier en vue de la formation de couches palettisables (12) constituées chacune de plusieurs produits de détail (2),
le dispositif (10) comprenant:
- un module de groupement (20) comprenant au moins un dispositif de transport horizontal (6) ainsi qu'au moins un manipulateur (5),
- un dispositif de transport (3) pour le transport en une ou plusieurs rangée(s) des produits de détail (2) dans une direction de transport (TR) dans une formation respectivement fermée et/ou ininterrompue ou dans une formation ayant des lacunes existant respectivement entre les produits de détail (2), vers ledit module de groupement (20),
- au moins un capteur (45) destiné à détecter, quant à leurs positions, les produits de détail (2) se trouvant dans la zone de saisie (4) du manipulateur (5);
- une unité de commande (15), dans lequel ledit au moins un capteur (45) transmet des signaux correspondants à l'unité de commande (15) qui commande les mouvements du manipulateur (5) selon le procédé selon l'une quelconque des revendications 1 à 8,
- un autre module de manipulation, d'empilage et/ou de palettisation qui est disposé en aval du module de groupement (20) dans la direction de transport (TR), dans lequel les produits de détail (2) amenés dans l'agencement en couches (12) sont transportés dans la direction de transport (TR) vers ledit autre module de manipulation, d'empilage et/ou de palettisation.

10. Dispositif (10) selon la revendication 9, dans lequel il est déterminé au moyen dudit au moins un capteur (45) s'il existe des lacunes entre des produits de détail (2) successifs dans la zone de saisie (4) du manipulateur (5).
